# EUROPEAN PATENT APPLICATION

(11) **EP 1 026 496 A1**
(43) Date of publication of application: **09.08.2000**
(21) Application number: 00300810.9
(22) Date of filing: 02.02.2000
(51) Int. Cl.: G01N 21/43, B60S 1/08

(54) **Optical coupler for a moisture sensor**

(30) Priority: 02.02.1999 US 241912
(71) Applicant: THE WHITAKER CORPORATION, Wilmington, Delaware 19808 (US)
(72) Inventor: Kadar-Kallem, Michael Aaron, Harrisburg, PA 17112 (US); Miller, Richard Dean, Lancaster, PA 17601 (US); Rowlette, John Robert, Hummelstown, PA (US); Weber, Ronald Martin, Annville, PA 17003 (US)
(74) Representative: Warren, Keith Stanley

(57) **Abstract**

An optical coupler (3) has an optical emitter (6), an optical detector (8), and a unitary body (9) having a first optical deflection surface (12) and a second optical deflection surface (13) on its exterior, the body (9) serving as a holder for the emitter (6) and the detector (8).

## Description

The invention relates to an optical coupler for a moisture sensor, and more particularly, to an optical coupler for a moisture sensor that operates by optical detection of moisture accumulating on a transparent window.

A known moisture sensor, as disclosed by U.S. Patent 5,661,303, has an optical emitter providing a beam of light that is directed to enter a transparent glass window. The beam of light becomes reflected from an opposite surface of the window that interfaces with air. An optical detector receives the reflected beam of light. Moisture that accumulates on the reflection surface of the window diffuses the beam of light, which causes a reduction of the detected beam that is received by the detector. The moisture accumulation is thereby detected, as a reduction of the detected beam, and is electronically processed to activate a mechanism for moisture removal, such as, a windshield wiper.

The known moisture sensor requires separate, component parts to be mounted on a circuit board, together with the emitter and the detector. An emanating collimator lens is provided to reduce the divergence of the emanated beam of light along its axis of transmission, as the beam emanates from the emitter. A receiving collimator lens is provided to reduce the divergence of the reflected beam of light that is reflected for reception by the detector. The need for collimator lenses as separate parts complicates the manufacturing process, in that, the separate parts require separate manufacture and inspection for defects, and further, the separate parts require assembly onto the circuit board with precise orientations relative to other component parts of the known moisture sensor. Normal tolerance variations commonly seen in a manufacturing environment can effect drastic variations in the performance of the assembly. Accordingly, a requirement for manufacture and assembly of separate parts comprises a disadvantage of the known moisture sensor.

The known moisture sensor has an optical coupler. The coupler has an exterior prism surface to refract the emanated beam of light for incidence on the transparent window at a correct angle of incidence. A second exterior prism surface is required to refract the reflected beam of light for reception by the receiving collimator lens. A further disadvantage of the known moisture sensor resides in the need for an optical coupler, as a separate component part, to be mounted in precise orientation relative to the collimator lenses. U.S. Patent 5,661,303 discloses a careful procedure by which the coupler and the collimator lenses are assembled.

Accordingly, the known moisture sensor, in the form of an assembly of multiple component parts, adds to manufacturing cost and difficulty, and adds to the overall size of the moisture sensor.

Another embodiment of the known moisture sensor reduces the number of parts by providing a single detector for receiving light beams from multiple emitters. However, the collimator lenses remain as separate parts. Further, the collimator lens at the detector is modified to have distinct multiple lens systems to couple multiple beams of light for reception by the detector. Further, the coupler of the known moisture sensor is modified to have an increased number of coupler sets corresponding to the number and the orientation of multiple emitters. A need for multiple coupler sets on a single optical coupler complicates its shape and increases the difficulty of its own manufacturing process. For example, an optical coupler with a complex shape is intolerant of dimensional variations that are attainable by known manufacturing processes of mass production, such as, injection molding and continuous extrusion.

A need exists for a moisture sensor that has a substantial reduction in the number of component parts to reduce its manufacturing cost and difficulty, assembly complexity, and to reduce its overall size. A further need exists for a moisture sensor that has an optical coupler of simplified shape and construction, which is tolerant of dimensional variations commonly encountered in known, manufacturing processes of mass production, such as, injection molding and continuous extrusion.

A further disadvantage of the known moisture sensor resides in the need for barricades that are mounted on the circuit board, together with the emitter and detector, which barricades exclude ambient light interference, and which barricades interrupt undesired optical paths that would be a source of undesired cross talk between the emitter and detector. A need exists for a moisture sensor of reduced complexity, and having inherent features that exclude ambient light interference and cross talk.

According to the invention, an optical coupler comprises a holder for an emitter and detector, to provide a unit of construction, which results in a substantial reduction in the number of component parts to reduce its manufacturing cost and difficulty, and further, which results in a substantial reduction in its overall size, particularly reducing its profile height. Further, the invention provides an optical coupler in the form of an optically transmissive body, and the emitter and detector are recessed in the body to provide a low profile.

Further, the invention provides an optical coupler in the form of an optically transmissive body holding an emitter and a detector, and the emitter and the detector have respective electrical leads that project to facilitate ease of placement on a circuit board. Further, the invention provides an optical coupler having the transmissive surface and the deflection surfaces on an exterior of an optically transmissive body, which provides optical beam deflection by reflection at the exterior surfaces where they interface with air, and which eliminates the need for collimation lenses as separate parts, as collimation lenses are molded directly on the optically transmissive body. Further, the invention provides an optical coupler having the transmissive surface and the deflection surfaces on an exterior of an optically transmissive body, and the deflection surfaces and the transmissive surface are flat for ease in polishing.

Further, the invention provides an optical coupler having the transmissive surface and the deflection surfaces on an exterior of an optically transmissive body, which surfaces are readily manufactured by a common molding process, for example, an injection molding process.

Further, the invention provides an optical coupler having the transmissive surface and the deflection surfaces on an exterior of an optically transmissive body, and an optical emitter and an optical detector are received in sockets in the body, which surfaces and which sockets are readily manufactured by an extrusion process followed by machining an extrudate produced by the extrusion process.

Embodiments of the invention will now be described, by way of example, with reference to the accompanying drawings, in which:
Figure 1 is a section view of a moisture sensor embodying an optical coupler as shown in Fig.2, together with a housing and a window on which the moisture sensor is mounted;
Figure 2 is a section view of an optical coupler and the moisture sensor as shown in Fig. 1, with component parts separated from one another;
Figure 3 is an end view of a socket in the coupler of the moisture sensor, as shown in Fig. 2;
Figure 4 is an isometric view of an extrudate that is divisible into multiple unitary bodies, wherein each unitary body is a part of the optical coupler, as shown in Fig. 1;
Figure 5 is a section view of another embodiment of an optical coupler and moisture sensor, with component parts separated from one another; and
Figure 6 is an isometric view of an extrudate that is divisible into multiple unitary bodies, wherein each unitary body is a part of the optical coupler as shown in Fig. 5.

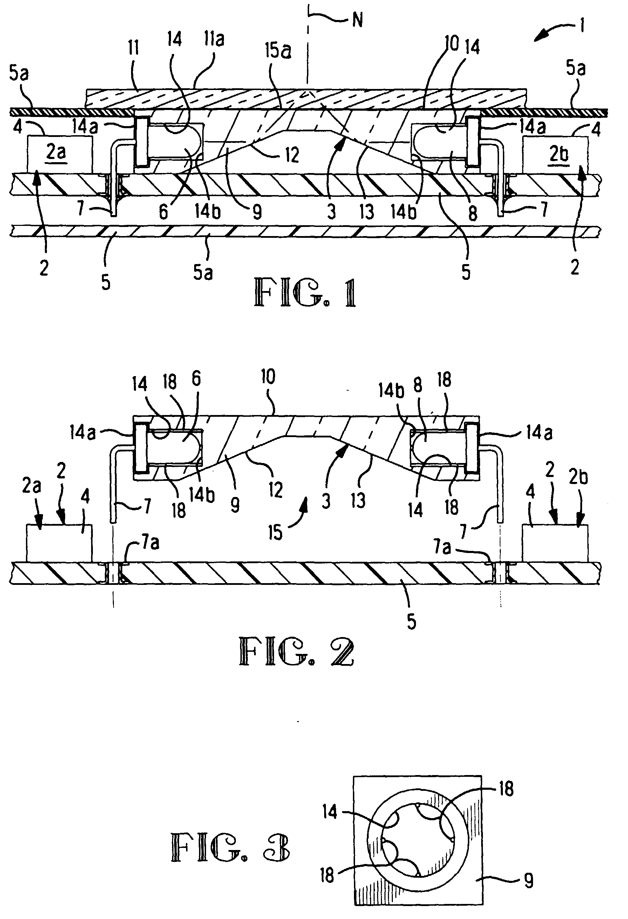

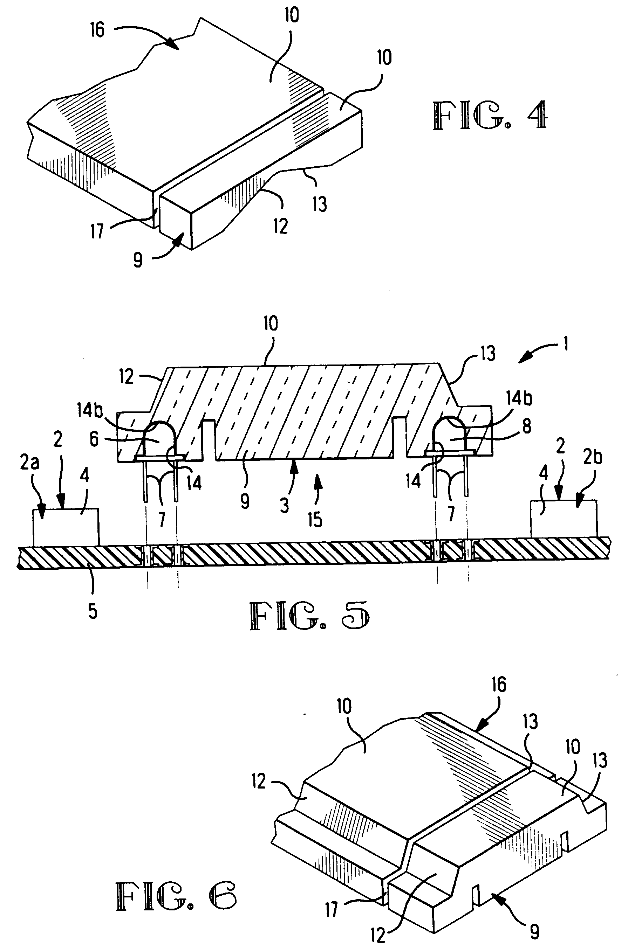

With reference to Figs. 1 and 5, a moisture sensor 1 comprises, a micro-controller 2 and-an optical coupler 3. The micro-controller 2 comprises an electronic semiconductor circuit device 4 mounted on a circuit board 5 of known construction. An optoelectronic emitter 6 and an optoelectronic detector 8 have respective electrical leads 7 for electrical connection to the circuit board 5, in a known manner, for example, by plugging in the leads 7, and by soldering the leads 7 to connect them with respective circuit paths 7a (Figure 2) on the circuit board 5. The emitter 6 is driven by the micro-controller 2 to emanate a beam of light, for example, a beam of infrared wavelength. The beam of light is received by the detector 8 to produce a signal from the detector in proportion to the intensity of the received beam of light. The micro-controller 2 further comprises, an electronic means for detecting and processing the signal from the detector 8.

For example, the term "micro-controller 2" is intended to mean a unitary circuit device 4, for example, as obtained from Zilog Incorporated, East Hacienda Avenue, Campbell, CA, Z8 processor family, for example, known as an 8 bit micro-controller of the E02 or E04 family of products. Similar devices are available from a number of suppliers. Further, the term "micro-controller 2" is intended to mean an optoelectronic transceiver having a transmitter section 2a and a receiver section 2b.

The emitter 6 is an industry standard LED, infrared, light emitting diode, having projecting electrical leads 7 projecting from an industry standard package, for example, a cylindrical, "TO" can, of known exterior dimensions. The package contains the LED, and further confines the divergence of a beam of light emanating from the LED to a cone angle of 16 degrees to 30 degrees along the major axis of beam transmission. The detector 8 is an industry standard detector 8, for example, an infrared photodiode, having projecting electrical leads 7 projecting from another industry standard package of known exterior dimensions. The emitter 6 and detector 8 are available from any number of industry standard LED suppliers.

With reference to Figs. 1 and 5, two embodiments of a moisture sensor 1 will now be described. Each embodiment has a corresponding optical coupler 3 that comprises, an optically transmissive, unitary body 9 having an optically transmissive surface 10 for transmitting a beam of light to enter a transparent window 11, Fig. 1, and become reflected by an opposite surface 11a of the window 11 that interfaces with air. The body 9 has a first optical deflection surface 12 opposing the emitter 6 and the transmissive surface 10 at respective angles to deflect the beam of light emanating from the emitter 6 to exit the transmissive surface 10 and enter the transparent window 11. The beam of light is incident on, and is reflected from, an opposite surface 11a of the transparent window 11 where the surface 11a interfaces with air. The angle of incidence is defined as the angle between the axis of propagation and the normal N, Fig. 1, to the surface 11a. To attain total reflection of the beam that is incident on the surface 11a, the angle of incidence must be greater than the critical angle. The critical angle is defined as arcsin (1/n), where n is the index of the material of the window 11 relative to air. Where the index, n = 1.514, for the window 11, the corresponding critical angle is 41 degrees. Thus, a beam with an angle of incidence greater than 41 degrees will be totally reflected in the absence of moisture accumulation on the window 11. A beam that is totally reflected will produce a broader range of contrast in reflection reduction due to increased accumulation of moisture. A beam with an angle of incidence less than 41 degrees will be partially reflected, which will reduce the range of contrast.

With further reference to Figs. 1 and 5, the body 9 of each embodiment of a coupler 3 for a moisture sensor 1 has a second optical deflection surface 13 to receive a reflected beam of light being reflected by the opposite surface 11a of the window 11. The second optical deflection surface 13 opposes the transmissive surface 10 and the detector 8 at further respective angles to deflect the reflected beam of light for receipt by the detector 8.

With further reference to Figs. 1 and 5, the emitter 6 and the detector 8 are received in corresponding sockets 14 in the body 9, whereby the body 9 comprises a holder for the emitter 6 and the detector 8. Advantageously, the emitter 6 and detector 8 are assembled to the body 9 to form a unit of construction 15, Figs. 2 and 5, with the respective electrical leads 7 of the emitter 6 and detector 8 projecting in the same direction and toward the circuit board 5. The unit of construction 15 is adapted for automated assembly to the circuit board 5, for example, using known pick and place machinery. The known pick and place machinery is commonly used for automated placement of each of the semiconductor circuit devices 4 at a precise orientation on the circuit board 5. Because the electrical leads 7 of the emitter 6 and detector 8 point toward the circuit board 5, the leads 7 are adapted for precise orientation on the circuit board 5, using the pick and place machinery. By having the body 9 and the emitter 6 and the detector 8 as a unit of construction 15, the problem of fitting the coupler 3 as a separate component part to other parts of the transceiver 2 is eliminated.

With reference to Figs. 1 and 5, each embodiment of the body 9 has an optically transmissive surface 10 for transmitting a beam of light to enter a transparent window 11 and become reflected by an opposite surface 11a of the window 11 that interfaces with air. The transmissive surface 10 is joined to the window 11 by a film 15a,Fig. 1, of a known, optically transmissive adhesive, to eliminate unwanted material/air interfaces. The unit of construction 15 and the circuit board 5 can be enclosed by a housing 5a, with only the surface 10 and the film 15a being exposed, as shown in Fig. 1, with only portions of the housing 5a being shown. A suitable clearance space is provided between the leads 7 and the interior of the housing 5a.

Further, each embodiment of the body 9 has a first optical deflection surface 12 opposing both the emitter 6, and the transmissive surface 10, at respective angles to deflect an emanated beam of light emanating from the emitter 6 to enter the transparent window 11. For example, the emanated beam propagates within the body 9, and is deflected by reflection from the first optical deflection surface 12, where such deflection surface 12 interfaces with air, for further transmission through the transmissive surface 10 and the film of adhesive 15a, so as to enter the window 11 at an angle greater than the critical angle, as dictated by the window/air interface. The beam is reflected at a complementary angle by the opposite surface 11a of the window 11 that interfaces with air.

Further, each embodiment of the body 9 has a second optical deflection surface 13 to receive a reflected beam of light being reflected by the opposite surface 11a of the window 11, the second optical deflection surface 13 opposing both the transmissive surface 10, and the detector 8, at further respective angles to deflect the reflected beam of light for receipt by the detector 8. For example, the reflected beam propagates within the body 9, and is deflected by reflection from the second deflection surface 13, where such deflection surface 13 interfaces with air.

The presence of moisture accumulation on the opposite surface 11a will diffuse the beam of light, and will cause a substantial reduction in the reflected beam that is detected by the detector 8. This reduction is detected and electronically processed by the micro-controller 2 to activate a moisture removal mechanism, for example, a heating resistance element, for example, a transparent electrode of tin oxide, that is in contact with the window 11, and that is activated by detected moisture. Such a mechanism comprises, for example, a heating element to remove dew-point sensitive condensation which forms on the outside surface of a commercial glass freezer door, wherein the food products are viewed through the window 11 on the freezer door for selection by a consumer, wherein the inside surface of window 11 is the refrigerated environment, and wherein, moisture, laden in air, under appropriate dew-point conditions, forms a condensate on the outside of window 11.

With reference to Figs. 2 and 4, the transmissive surface 10 and the deflection surfaces 12, 13 are on an exterior of the body 9, and the emitter 6 and detector 8 are recessed in the body 9 to provide a low profile. By having the body 9 serve as a holder for the emitter 6 and detector 8, deflection of the beam by the deflection surfaces 12, 13 is confined within the body 9 itself, which reduces the size of the moisture sensor 1, as compared with a moisture sensor 1 having an optical coupler 3 spaced from an emitter 6 and detector 8. Further, having the deflection surfaces 12, 13 on an exterior of the body 9, means that the size of the body 9 can be reduced, which positions the optical deflection surfaces 12, 13 nearer to the emitter 6 and detector 8, as well as nearer to the transmissive surface 10, which reduces the size of the body 9, and improves optical coupling efficiency due to the reduced size. With reference to the embodiment shown in Figs. 5 and 6, the deflection surfaces 12, 13 and the transmissive surface 10 are on a top side of the body 9, and the emitter 6 and the detector 8 are received by sockets 14 in a bottom side of the body 9.

With reference to the embodiment shown in Figs. 1 and 2, the transmissive surface 10 is on a top side of the body 9, the deflection surfaces 12, 13 are on an bottom side of the body 9, and the emitter 6 and detector 8 are received by sockets 14 in opposite ends 14a of the body 9.

With reference to Figs. 4 and 6, mass production of each embodiment of the body 9 will be further described. For each embodiment, the transmissive surface 10 and the deflection surfaces 12, 13 are plumb in the same direction for ease of manufacture. For example, each embodiment of the body 9 is suitable for mass production by an extrusion operation. An extrusion process produces a continuous extrudate 16 having the exterior surfaces 10, 12, 13 that are plumb in the same direction as is the continuous length of the continuous extrudate 16. A continuous extrudate 16 is made possible because, the reflection surfaces 12, 13 and the transmissive surface 10 of each unitary body 9 are plumb in the same direction, which surfaces 10, 12, 13 extend along the continuous length of an extrudate 16. Further the surfaces 10, 12, 13 are each continuous, rather than being discontinuous, which eliminates a need for a costly machining operation to obtain their desired shapes. Further, the surfaces 10, 12, 13 are each flat for ease in polishing.

The extrusion process is followed by exterior polishing of the flat surfaces 10, 12, 13 to reduce diffusion upon reflection of the beam of light, and further, followed by cutting the extrudate 16 along a parting line 17 Figs. 4 and 6, to obtain an individual body 9, and further, followed by machining to form each of the sockets 14.

Another process of mass production involves a molding operation, according to which, each body 9 is individually formed in a mold cavity, while the sockets 14 are formed by mold core pins that project into the mold cavity during formation of the individual body 9. The surfaces 10, 12, 13 are formed with a high polish during formation of the individual body 9 against a highly polished mold cavity. Further, with reference to Fig. 4, each socket 14 is formed, by mold core pins, as circumferentially spaced, thin webs 18 within each socket 14, to provide a simplified chuck that centers the emitter 6 and detector 8 in a corresponding socket 14. Similar webs are molded in the embodiment of the body 9 that is shown in Fig. 5.

The sockets 14 have optically transmissive lens surfaces 14b that are directly on the unitary transmissive body 9. Each of the surfaces 14 is shaped, either flat, or curved, to provide collimation of the beam of light that is emitted from the emitter 6 in one socket 14, or to provide collimation focusing of the collimated beam of light that is received by the detector 8 in another socket 14. Collimating lenses as separate parts are eliminated.

The body 9 is made of an optically transmissive material, for example, polycarbonate having an added colorant material that is transmissive to an infrared wavelength spectrum of the emitter 6 and detector 8, and is non-transmissive of ambient light, of the visible light spectrum, which substantially isolates the detector 8 from unwanted ambient light.

Further, the optical coupler 1 is enclosed by the housing 5a, with only the surface 10 of the coupler exposed. The reflection surfaces 12 and 13 are within the enclosing housing 5a, which further restricts entry of ambient light through such surfaces, and isolates the detector 8 from unwanted ambient light.

## Claims

1. An optical coupler (3) for a moisture sensor (1), characterized by a transparent body (9) having an optically transmissive surface (10) for transmitting a beam of light to enter a transparent window (11) and become reflected by an opposite surface (11a) of the window that interfaces with air, an emitter (6) and a detector (8), the body having a first optical deflection surface (12) to deflect a beam of light emanating from the emitter to enter the transparent window, and a second optical deflection surface (13) to receive a reflected beam of light being reflected by the opposite surface of the window to deflect the reflected beam of light for receipt by the detector, and the emitter and the detector being disposed in the body, whereby the body comprises a holder for the emitter and the detector.

2. An optical coupler for a moisture detector, characterized by an emitter (6) of an emanated beam of light, a transparent unitary body (9) having an optically transmissive surface(10) for directing the emanated beam of light to enter a transparent window (11) and become reflected by an opposite surface (11a) of the window that interfaces with air, the unitary body having a first deflection surface (12) opposing the emitter and the transmissive surface at respective angles, and a detector (8) of the reflected beam of light, the unitary body having a second deflection surface (13) opposing the detector and the optically transmissive surface at further respective angles, and the body comprising a holder (14) for the emitter and the detector.

3. An optical coupler as claimed in claim 1 or 2 wherein said surfaces (10,12,13) are plumb in the same direction for ease of manufacture.

4. An optical coupler as claimed in claim 1, 2 or 3 wherein the transmissive surface (10) and the deflection surfaces (12,13) are on an exterior of the body (9), and the emitter (6) and detector (8) are recessed in the body to provide a low profile.

5. An optical coupler as claimed in any preceding claim wherein the emitter (6) and detector (8) are disposed in corresponding sockets (14) in the body.

6. An optical coupler as claimed in claim 1, 2 or 3 wherein the transmissive and deflection surfaces (10,12,13) are on a top side of the body (9), and the emitter (6) and the detector (8) are disposed in sockets (14) in a bottom side of the body.

7. An optical coupler as claimed in claim 1, 2 or 3 wherein the transmissive surface (10) is on a topside of the body, the deflection surfaces (12,13) are on a bottom side of the body, and the emitter (6) and detector (8) are disposed in sockets (14) in opposite ends of the body.

8. An optical coupler as claimed in claim 5, 6 or 7 wherein the emitter (6) and the detector (8) are disposed in respective sockets (14) incorporating integral lenses to focus and collimate, respectively, a light beam within the optical coupler.

9. An optical coupler as claimed in any preceding claim wherein electrical leads (7) on the emitter and electrical leads (7) on the detector project in the same direction for ease of electrical connection with a circuit board (5).

10. An optical coupler as claimed in any preceding claim wherein the deflection surfaces (12,13) and the transmissive surface (10) are flat for ease in polishing.
